# EUROPEAN PATENT APPLICATION

(11) **EP 4 589 301 A1**
(43) Date of publication of application: **23.07.2025**
(21) Application number: 23865002.2
(22) Date of filing: 07.06.2023
(51) Int. Cl.: G01N 35/00

(54) **ANALYSIS DEVICE**

(30) Priority: 16.09.2022 JP 2022148391
(71) Applicant: FUJIFILM Corporation, Tokyo 106-8620 (JP)
(72) Inventor: YOKOKURA, Tairo, Ashigarakami-gun, Kanagawa 258-8538 (JP)
(74) Representative: Dehns Germany Partnerschaft mbB
(86) International application number: PCT/JP2023/021256
(87) International publication number: WO 2024/057638

(57) **Abstract**

An analytical device includes a loading portion that has a substrate, which is provided with a plurality of cells, and a pressing member that presses an analysis chip; an item-information reading unit that reads item information of the analysis chip; a stain detection mechanism that stores, in a memory, stain-related information on each of the cells, the stain-related information including stain information related to presence or absence of a stain on each of the cells and previous item information that is item information of a loaded analysis chip, the stain information and the previous item information being associated with each other; and a processor that executes, before loading of a to-be-loaded analysis chip to be loaded in a to-be-used cell, carryover suppression processing for suppressing carryover, in which a stain due to previous measurement affects current measurement, based on stain-related information that is stored in the memory and that is related to the to-be-used cell and current item information that is acquired from the item-information reading unit and that is item information of the to-be-loaded analysis chip.

## Description

### BACKGROUND OF THE INVENTION

### 1. Field of the Invention

The present disclosure relates to an analytical device.

### 2. Description of the Related Art

In the field of point of care testing (POCT), a known analytical device performs analysis of a test substance sample, such as measurement of the concentration of a specimen included in the test substance sample. There is a device that performs, as an example of analysis of a test substance sample, measurement of the concentration of a specimen included in a test substance such as blood or urine. For example, WO2013/161664A discloses an analytical device that detects a color reaction by using a dry analysis chip including a spreading layer in which a test substance sample is to be spread and a reaction layer having a reagent.

When such an analysis chip is used, a test substance sample spreads in the spreading layer upon being spotted onto the spreading layer of the analysis chip. When the test substance sample reaches the reaction layer, a specimen in the test substance sample reacts with the reagent in the reaction layer and produces a reaction substance that develops color. The analytical device described in WO2013/161664A can measure the concentration of a specimen in a test substance sample by irradiating the reaction layer, where the test substance sample reacts with the reagent, with detection light that is from a light source and that includes light of a wavelength to be absorbed by a reaction substance that develops color, and acquiring a detection signal corresponding to reflected light from the reaction layer.

The analytical device described in WO2013/161664A includes an incubator and incubates the analysis chip spotted with the test substance sample for a predetermined time in the incubator. A disc-shaped rotary member is included inside the incubator, and multiple element chambers (cells) in which analysis chips are to be arranged are provided on the rotary member. Each element chamber is constituted by a concave section formed on an upper surface of the rotary member and a pressing member disposed above each concave section to face the concave section. Each analysis chip is inserted into the element chamber and held in a state of being pressed against the concave section by the pressing member.

### SUMMARY OF THE INVENTION

In the analytical device, as exemplified in WO2013/161664A, using dry analytical chips, multiple analysis chips corresponding to multiple measurement items are included to allow specification and testing of desired test items. As mentioned earlier, the specimen in the test substance sample reacts with the reagent in the reaction layer of the analysis chip and produces a reaction substance that develops color. Even after the analysis chip is discharged, this reaction substance may remain in the cell. Therefore, an analysis chip to be analyzed next may be loaded into a cell while a reaction substance produced at a previous analysis chip still remains in the cell. Depending on the measurement item for the next analysis chip, there are a case where analysis can be performed without any problem and a case where an event called carryover, in which a measured value is increased due to an influence of a reaction substance remaining in a cell, occurs. When carryover occurs, the reliability of the analysis results is significantly reduced.

The technology according to the present disclosure provides an analytical device that can suppress measurement errors due to carryover and perform measurement with higher reliability than the related art when analyzing a test substance sample by using a dry analysis chip.

The analytical device according to the present disclosure is an analytical device on which a plurality of analysis chips are to be detachably loaded, the plurality of analysis chips each having a reaction region in which a reagent for a corresponding measurement item is immobilized and each being provided, outside the reaction region, with item information related to the corresponding measurement item, the analytical device being configured to analyze a plurality of measurement items for a test substance sample by spotting the test substance sample onto the reaction region of each of the plurality of analysis chips and measuring a state of a reaction between the test substance sample and the reagent, the analytical device including:
a loading portion that has a substrate provided with a plurality of cells in each of which a corresponding one of the analysis chips is to be loaded and a pressing member that is provided for each of the cells and that presses the analysis chip loaded in the cell in a direction toward the reaction region;
an item-information reading unit that reads the item information of each of the analysis chips;
a stain detection mechanism that detects a stain adhering to the pressing member due to a loaded analysis chip that is the analysis chip loaded in one of the cells in previous measurement, the stain detection mechanism being configured to store, in a memory, stain-related information on each of the cells, the stain-related information including stain information related to presence or absence of the stain on each of the cells and previous item information that is the item information of the loaded analysis chip, the stain information and the previous item information being associated with each other; and
a processor that executes, before loading of a to-be-loaded analysis chip that is the analysis chip to be loaded in a to-be-used cell that is the cell to be used in current measurement, carryover suppression processing for suppressing carryover, in which the stain due to the previous measurement affects the current measurement, based on the stain-related information that is stored in the memory and that is related to the to-be-used cell and current item information that is acquired from the item-information reading unit and that is the item information of the to-be-loaded analysis chip.

The memory may store combination information related to a target combination that is a combination of a plurality of pieces of the item information with a possibility of occurrence of carryover. It may be configured such that, in the carryover suppression processing, the processor executes, based on the combination information, combination determination processing of determining whether a combination of the previous item information acquired from the stain-related information on the to-be-used cell and the current item information of the to-be-loaded analysis chip acquired through the item-information reading unit corresponds to the target combination and executes preset processing when determined that the combination corresponds to the target combination in the combination determination processing.

The processor may be configured to, as the preset processing, determine presence or absence of the stain on the to-be-used cell based on the stain information acquired from the stain-related information on the to-be-used cell and change the to-be-used cell when determined that the stain is present.

The processor may be configured to, as the preset processing, determine presence or absence of the stain on the to-be-used cell based on the stain information acquired from the stain-related information on the to-be-used cell and stop measurement using the to-be-used cell when determined that the stain is present and execute processing related to cleansing of the pressing member for the to-be-used cell.

The analytical device may further include a cleansing mechanism that cleans the pressing member, and the processor may be configured to cause the cleansing mechanism to cleanse, as the processing related to the cleansing, the pressing member for the to-be-used cell.

The processor may be configured to issue a warning, as the processing related to the cleansing, to prompt a user to cleanse the to-be-used cell.

The processor may be configured to execute, after the stain-related information is acquired by the stain detection mechanism, processing related to cleansing of the pressing member for the cell determined to have the stain based on the stain information, regardless of whether subsequent measurement is to be started.

The target combination may include two combinations that are a combination of a measurement item to be measured first and producing a reaction substance affecting pH and a measurement item to be measured later and for which a pH indicator is used as the reagent and a combination of a measurement item to be measured first and producing ammonia as a result of a reaction between a specimen in the test substance sample and the reagent and a measurement item to be measured later and for which ammonia is measured.

In the stain detection mechanism, a detection unit used in measurement of a state of a reaction between the test substance sample and the reagent may also serve as a detection unit that detects the stain on the pressing member.

With the technology according to the present disclosure, when analyzing a test substance sample by using a dry analysis chip, it is possible to suppress the occurrence of measurement errors due to carryover and possible to perform measurement with higher reliability than the related art.

### BRIEF DESCRIPTION OF THE DRAWINGS

Fig. 1 is a schematic diagram illustrating an overall configuration of an analytical device according to an embodiment;
Fig. 2 is a plan view of a main part of an analytical device;
Fig. 3 is a cross-sectional view of a transport path section for an analysis chip;
Fig. 4 is an enlarged view of the region enclosed by the two-dot chain line in Fig. 3;
Fig. 5A is a perspective view of an analysis chip, and Fig. 5B is a plan view of a back surface of the analysis chip;
Fig. 6 is an explanatory diagram of a configuration of a detection unit and photometry;
Fig. 7 is an explanatory diagram of a stain detection method using a detection unit as a stain detection mechanism;
Fig. 8 is an explanatory diagram of stain-related information stored in a memory;
Fig. 9 is a diagram showing examples of a target combination stored in a memory;
Fig. 10 is an example of the flow of a test in an analytical device;
Fig. 11 is an example of the flow of stain detection processing in an analytical device;
Fig. 12 is an explanatory diagram of a cleansing mechanism;
Fig. 13 is the flow of stain detection processing in a modification; and
Fig. 14 is the flow of stain detection processing in a modification.

### DESCRIPTION OF THE PREFERRED EMBODIMENTS

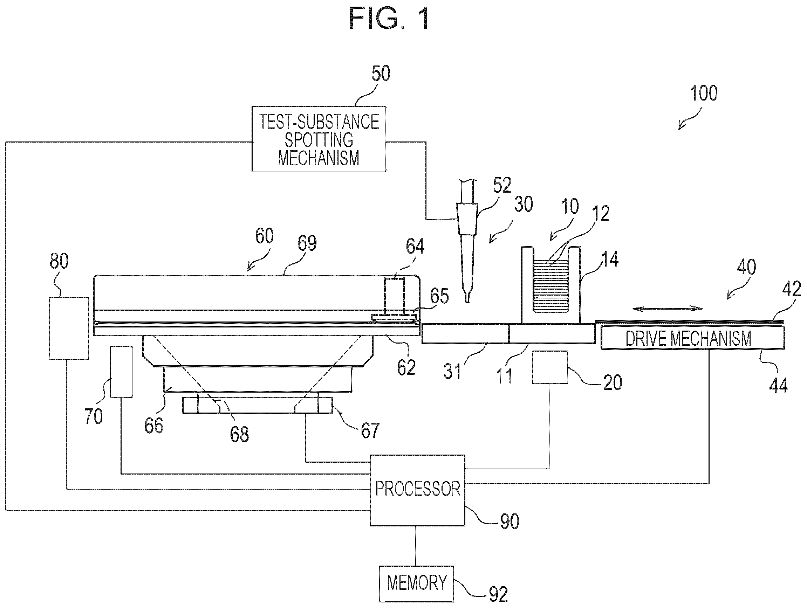

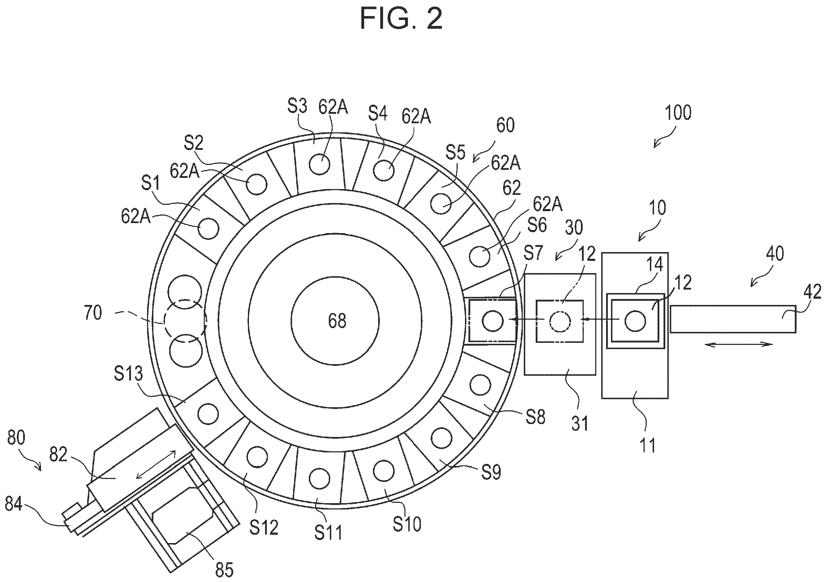

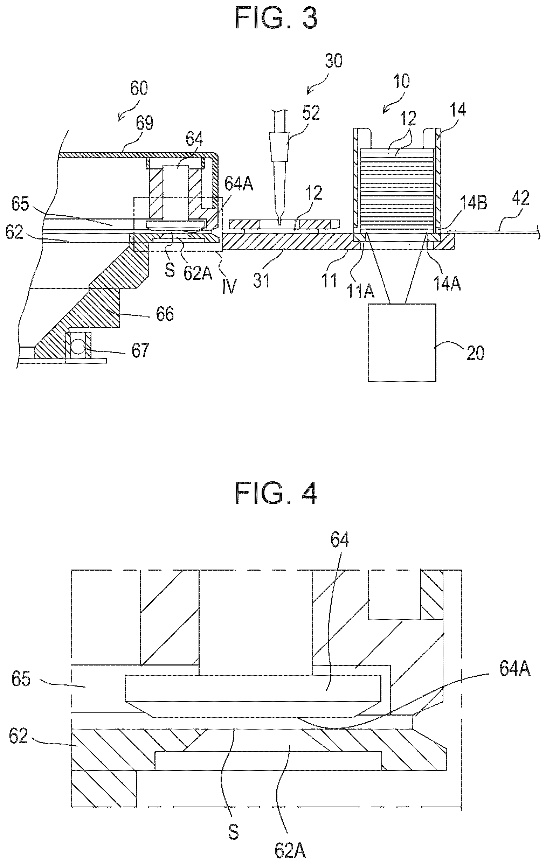

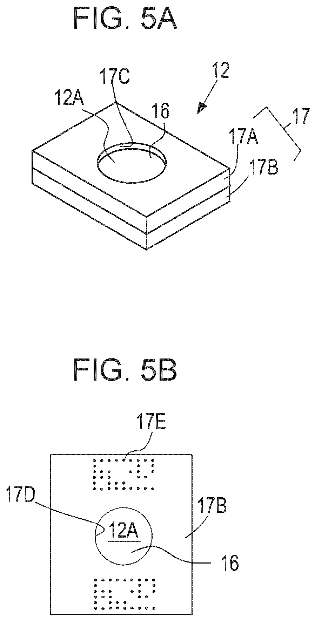

Hereinafter, preferred embodiments of the present invention will be described with reference to the drawings. Fig. 1 is a schematic diagram illustrating an overall configuration of an analytical device 100 in one embodiment, Fig. 2 is a plan view of a main part of the analytical device in Fig. 1, Fig. 3 is a cross-sectional view of a transport path section for an analysis chip, Fig. 4 is an enlarged view of the region enclosed by the two-dot chain line in Fig. 3, Fig. 5A is a perspective view of an analysis chip, and Fig. 5B is a plan view of the back surface of the analysis chip.

The analytical device 100 according to one embodiment of the present disclosure illustrated in Fig. 1 is an example of an analytical device that analyzes a test substance sample, and measures the concentration of a specimen included in the test substance sample by using a dry analysis chip. Specifically, the analytical device 100 in the present example uses blood as the test substance sample and optically measures the concentration of a specimen included in the blood. More specifically, the concentration of the specimen is measured by colorimetric determination.

The analytical device 100 includes a chip set section 10, a reader 20, a test-substance spotting section 30, a chip transport mechanism 40, a test-substance spotting mechanism 50, an incubator 60, a detection unit 70, a chip disposal mechanism 80, a processor 90, and a memory 92.

In the chip set section 10, a stocker 14 for storing analysis chips 12 is disposed on a holding base 11. Multiple analysis chips 12 are stacked and stored in the stocker 14.

As illustrated in Fig. 5A and Fig. 5B, each analysis chip 12 has a reaction region 12A in which a reagent is immobilized. The reagent reacts with a specimen and thereby produces a substance that develops a specific color. The substance that develops color through this reaction is hereinafter referred to as a reaction substance. As the reagent, for example, a dry reagent that is in a dry state at least at the time of shipment is used. The test substance sample is spotted onto the reaction region 12A of each analysis chip 12.

Each analysis chip 12 has a carrier 16 onto which a test substance sample is spotted, and the carrier 16 is accommodated in a case 17. The case 17 is constituted by a first case 17A and a second case 17B and accommodates the carrier 16 such that the carrier 16 is sandwiched between the first case 17A and the second case 17B. An opening 17C that functions as a dropping port for spotting a test substance sample onto the reaction region 12A is formed in the first case 17A. An opening 17D for irradiation of the reaction region 12A with light is formed in the second case 17B. The carrier 16 is exposed through the opening 17C of the first case 17A constituting the front surface of the analysis chip 12. The carrier 16 is exposed through the opening 17D of the second case 17B constituting the back surface of the analysis chip 12. A region of the carrier 16 exposed through the opening 17D constitutes the reaction region 12A where the reagent is immobilized. The second case 17B is provided with an information code 17E in which item information related to a measurement item is encoded. The information code 17E is, for example, a pattern in which multiple dots are arranged, and the arrangement pattern of the dots is different for each measurement item. Naturally, as the information code 17E, a one-dimensional barcode, a two-dimensional barcode, or the like may be used.

By changing the reagent to be reacted with a test substance sample, it is possible to analyze multiple measurement items for the test substance sample. Multiple analysis chips 12 are prepared for respective measurement items, and a reagent corresponding to a measurement item is immobilized at the carrier 16 of each of the analysis chips 12. Item information provided for each analysis chip 12 is, for example, identification information (such as reagent name and identification code) on a reagent immobilized at the carrier 16 of the analysis chip 12 or identification information (such as item name and identification code) on a measurement item to be measured with the reagent.

In Fig. 1, the reader 20 is one form of the item-information reading unit and is a code reader that reads the information code 17E provided at the back surface of each analysis chip 12. As illustrated in Fig. 3, the stocker 14 has an opening 14A in a bottom surface thereof. Each analysis chip 12 is accommodated in an orientation in which the surface with the information code 17E faces the opening 14A side of the stocker 14. Therefore, the information code 17E of the analysis chip 12 positioned at the lowermost stage on the opening 14A side is exposed through the opening 14A also in the stocker 14. An opening 11A is also formed in the holding base 11 on which the stocker 14 is placed. Therefore, the information code 17E of the analysis chip 12 positioned at the lowermost stage in the stocker 14 is exposed to the reader 20 through the opening 11A of the holding base 11 and the opening 14A of the stocker 14. The reader 20 is disposed below the holding base 11 and reads the information code 17E exposed through the openings 11A and 14A.

The reader 20 is constituted by, for example, an image sensor such as a charge coupled device (CCD) or a complementary metal oxide semiconductor (CMOS). The item information read by the reader 20 is output to the processor 90.

In the test-substance spotting section 30, a test substance such as blood plasma, whole blood, serum, or urine is spotted onto each analysis chip 12. The test-substance spotting section 30 is provided with a chip support base 31, and spotting of the test substance sample onto each analysis chip 12 transported onto the chip support base 31 is performed on the chip support base 31. The test substance sample is spotted by the test-substance spotting mechanism 50 described later. The chip support base 31 is disposed adjacent to the holding base 11.

As illustrated in Fig. 1 and Fig. 2, the chip transport mechanism 40 transports each of the analysis chips 12 from the chip set section 10 to the test-substance spotting section 30 and further transports each of the analysis chips 12 from the test-substance spotting section 30 to the incubator 60. The chip transport mechanism 40 includes a chip transport member 42 in the form of a thin plate, and a drive mechanism 44 that reciprocates the chip transport member 42 in the direction in which the chip set section 10, the test-substance spotting section 30, and the incubator 60 are arranged. The drive mechanism 44 is, for example, a linear actuator. The chip transport member 42 is slidably supported by a guide rod (not illustrated) and is reciprocated by the drive mechanism 44.

As illustrated in Fig. 2 and Fig. 3, an insertion opening 14B into which the chip transport member 42 is inserted is provided in a sidewall of the stocker 14. The chip transport member 42 is inserted into the stocker 14 through the insertion opening 14B, and the chip transport member 42 is pressed against, among the stacked analysis chips 12, the analysis chip 12 accommodated at the lowermost stage. In this state, the analysis chip 12 is transported toward the incubator 60 side by the chip transport member 42 being moved toward the incubator 60 side.

In Fig. 1, the test-substance spotting mechanism 50 includes a nozzle 52, a suction-ejection mechanism (not illustrated), and a moving mechanism that moves the nozzle 52. The test-substance spotting mechanism 50 sucks a test substance sample from a test-substance accommodation unit (not illustrated) and, in the test-substance spotting section 30, spots the test substance sample onto each analysis chip 12.

In Fig. 1 and Fig. 2, the incubator 60 is capable of holding the multiple analysis chips 12. The incubator 60 has a temperature control function of maintaining a constant temperature in order to promote a reaction between the reagent of each analysis chip 12 and the test substance sample. The set temperature is, for example, 37°C.

The incubator 60 has a substrate 62 provided with multiple cells S1 to S13 in each of which a corresponding one of the analysis chips 12 is to be loaded. In the present example, the substrate 62 is annular in shape, and thirteen cells S1 to S13 are arranged along the circumference. In the following description, when it is necessary to distinguish the multiple cells S1 to S13 from each other, the multiple cells S1 to S13 will be denoted with sub-reference numerals 1 to 13, and when distinction thereof is not necessary, the multiple cells S1 to S13 will simply be referred to as the cell S. The cell S is, for example, a concave section having a size and a shape with which the cell S can accommodate the analysis chip 12. The cell S is an example of a loading portion on each of which the analysis chip 12 is to be loaded.

As illustrated in Fig. 3 and Fig. 4, the incubator 60 has a pressing member 64 that presses the analysis chip 12 loaded in the cell S in a direction toward the reaction region 12A. A slit-shaped space is formed between the pressing member 64 and the cell S, and the analysis chip 12 is loaded in this space. The pressing member 64 presses the analysis chip 12 loaded in the cell S in a direction toward the reaction region 12A. The pressing member 64 is provided for each of the multiple cells S1 to S13. The pressing member 64 is held by a holding member 65 disposed on the substrate 62. The holding member 65 holds a plurality of the pressing members 64 (here, thirteen pressing members) provided for respective cells S1 to S13.

A rotary cylinder 66 is provided at a lower surface of the substrate 62. The rotary cylinder 66 has a substantially inverted triangular cross-sectional shape in which the inner diameter decreases toward the lower side. A bearing 67 is disposed at a lower portion of the outer periphery of the rotary cylinder 66, and the rotary cylinder 66 is rotatably supported by the bearing 67. The holding member 65 rotates integrally with the substrate 62. A bottom portion of the rotary cylinder 66 forming the vertex of the inverted triangle is open, and this opening functions as a disposal hole 68 for discarding of used analysis chips 12. Each used analysis chip 12 is moved in a state of being loaded in the cell S toward the center side of the annular substrate 62 and is dropped toward the inclined surface of the rotary cylinder 66. Each used analysis chip 12 dropped into the rotary cylinder 66 slides on the inclined surface and is discarded through the disposal hole 68.

The holding member 65 is provided with heating means (not illustrated), and the analysis chips 12 in the cells S1 to S13 are maintained at a constant predetermined temperature by the temperature adjustment of the heating means. A thermal cover 69 is installed on the upper surface of the holding member 65. In Fig. 2, only the arrangement of the cells S1 to S13 on the substrate 62 is illustrated.

An aperture window 62A for photometry is formed at the center of the bottom surface of each of the cells S1 to S13 on the substrate 62, and the reflectance optical density of each of the analysis chips 12 is measured through the aperture windows 62A by the detection unit 70 disposed at the position illustrated in Fig. 1.

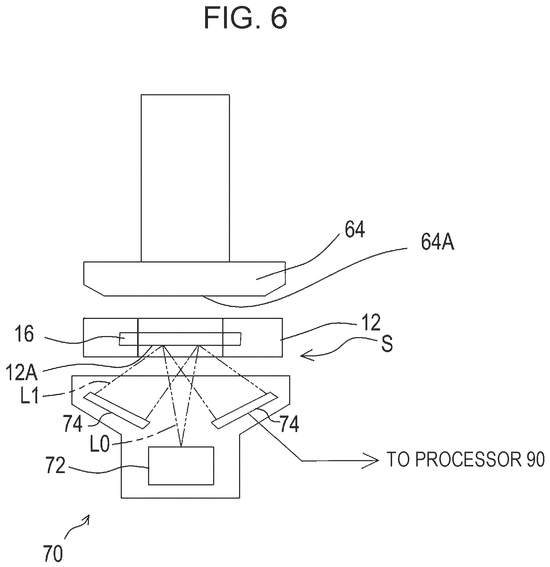

Fig. 6 is a schematic diagram illustrating a positional relationship between the detection unit 70 and the analysis chip 12 and photometry of the analysis chip 12 performed by the detection unit 70. The detection unit 70 is installed below the substrate 62 of the incubator 60, acquires a detection signal indicating the optical density of the reaction region 12A of the analysis chip 12, and outputs the detection signal to the processor 90. The processor 90 derives the concentration of the specimen included in the test substance sample on the basis of the detection signal acquired from the detection unit 70. In this example, the detection unit 70 is disposed below the loading position of the analysis chip 12 to face the reaction region 12A of the analysis chip 12.

As illustrated in Fig. 6, the detection unit 70 includes a light source 72 for irradiating the reaction region 12A with detection light L0, and a photodetector 74 that receives light from the reaction region 12A and photoelectrically converts the light.

The light source 72 irradiates the reaction region 12A with light through the opening 17D of the case 17 of the analysis chip 12. The wavelength range of the light is determined according to a specimen (that is, a measurement item). For example, as mentioned above, a reaction substance that develops a specific color is generated by a reaction between a specimen and a reagent in the present example. Since the light with which the light source 72 performs irradiation is detection light for detecting whether a reaction substance has been generated, the wavelength range is determined according to a color developed by the reaction substance. The detection light in this example is, for example, light that includes a wavelength range absorbed by a reaction substance in order to detect the reaction substance.

In particular, it is preferable that the wavelength range of the detection light L0 is limited to the wavelength range absorbed by the reaction substance. As the light source 72, a light source such as a light emitting diode (LED), an organic electro luminescence (EL), or a semiconductor laser is used, for example. Detection light limited to a specific wavelength range may be generated by a combination of a light source that emits light in a relatively broad wavelength range, such as a white light source, and a bandpass filter that transmits only the specific wavelength range. Although only one light source 72 is illustrated in Fig. 6, multiple light sources 72 that output multiple beams of light in different wavelength ranges, or a single white light source and multiple bandpass filters that transmit multiple beams of light in different wavelength ranges are actually included to measure multiple measurement items.

The photodetector 74 detects output light L1 output from each analysis chip 12 when the analysis chip 12 is irradiated with the detection light L0. The photodetector 74 is, for example, a light-receiving element such as a photodiode that outputs a detection signal corresponding to the amount of light. In this example, two photodetectors 74 are included. The photodetector 74 outputs a detection signal to the processor 90. The processor 90 acquires a detection signal corresponding to the output light L1 and derives the concentration of a specimen.

In the reaction region 12A, the test substance sample reacts with the reagent and produces a reaction substance that develops a specific color. Due to the generation of the reaction substance, the color of the reaction region 12A changes, and this color change appears as a change in the optical density of the reaction region 12A. The output light L1 corresponds to the optical density of the reaction region 12A and reflects information about the reaction substance due to light absorption by the reaction substance, and the like. The optical density of the reaction region 12A changes according to the amount of the reaction substance, and the amount of the reaction substance represents the concentration of the specimen in the test substance sample. Therefore, the concentration of the specimen can be measured on the basis of the detection signal representing output light including information about the reaction substance.

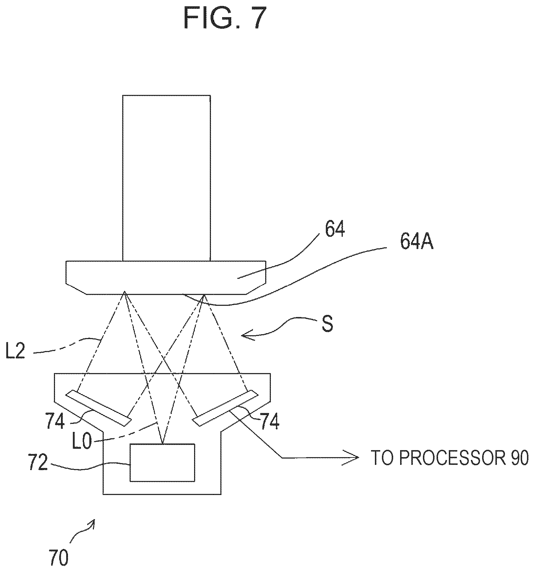

The reaction substance generated when the test substance sample reacts with the reagent may adhere to a pressing surface 64A of the pressing member 64. Since the reaction substance is generated by the reaction between the test substance sample and the reagent in the analysis chip 12, a stain due to the adhesion of the reaction substance to the pressing member 64 is a stain caused by the loaded analysis chip that is the analysis chip 12 loaded in the cell S in previous measurement. The detection unit 70 also functions as a stain detection mechanism that detects a stain adhering to the pressing surface 64A of the pressing member 64. Fig. 7 is a schematic diagram illustrating a positional relationship between the detection unit 70 and the pressing member 64 and a stain detection method. As illustrated in Fig. 7, in a state where the analysis chip 12 is not loaded in the cell S, the pressing member 64 is irradiated with the detection light L0 from the light source 72, and the photodetector 74 detects reflected light L2 from the pressing member 64. For example, when it is assumed that blood has adhered as a stain, light in the absorption wavelength range (540 nm to 600 nm) of blood is used as the detection light L0.

The reflected light L2 detected by the photodetector 74 includes information on whether a stain has adhered to the pressing member 64. The photodetector 74 outputs a stain detection signal corresponding to the reflected light L2 to the processor 90. The processor 90 determines whether a stain has adhered to the pressing member 64 on the basis of the stain detection signal corresponding to the reflected light L2. Then, the processor 90 records in the memory 92 that the detected cell S is stained when determined that a stain is present on the pressing member 64 and records in the memory 92 that the detected cell S is not stained when determined that no stain is present on the pressing member 64. The detection unit 70 and the processor 90 constitute a stain detection mechanism.

The chip disposal mechanism 80 is attached to the incubator 60. The chip disposal mechanism 80 pushes out and drops the used analysis chip 12 after measurement to a center portion of the incubator 60 and discards the analysis chip 12.

The chip disposal mechanism 80 includes a disposal bar 82 that moves back and forth in a slit-shaped space above the cell S in a direction from the outer peripheral side toward the center. A collection box for collecting used analysis chips 12 is disposed below the disposal hole 68.

The processor 90 has, for example, a CPU and a memory and executes processing in the analytical device 100 by the CPU executing a program. The processor 90 also comprehensively controls each part of the analytical device 100.

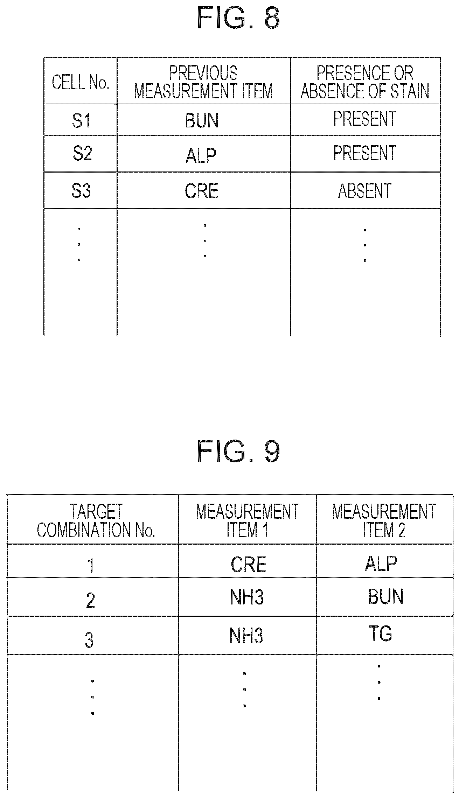

The memory 92 stores, for example, a test program. Additionally, the memory 92 stores stain-related information related to the cells S1 to S13. For example, as illustrated in Fig. 8, the memory 92 stores, as stain-related information, the cell Nos., measurement items (previous measurement items) measured in each cell S in previous measurement, and results of determination that is performed after the previous measurement and before next measurement and that is determination of presence or absence of a stain on the pressing surface 64A of each pressing member 64. Furthermore, the memory 92 stores multiple pieces of combination information with a possibility of occurrence of carryover. Pieces of combination information related to target combinations with a possibility of occurrence of carryover are stored. The target combination includes, for example, two combinations that are a combination of a measurement item to be measured first and producing a reaction substance affecting pH and a measurement item to be measured later and for which a pH indicator is used as a reagent and a combination of a measurement item to be measured first and producing ammonia as a result of a reaction between a specimen in a test substance sample and the reagent and a measurement item to be measured later and for which ammonia is measured. For example, as shown in Fig. 9, combinations of CRE (creatinine) and ALP (alkaline phosphatase), NH₃ (ammonia) and BUN (urea nitrogen), and NH₃ and TG (triglyceride) can be mentioned. In Fig. 9, the measurement item 1 is measured first and the measurement item 2 is measured later.

When the processor 90 receives an instruction to start a test of the analysis chip 12, the processor 90 acquires, before a to-be-loaded analysis chip (hereinafter referred to as the to-be-loaded analysis chip 12n) is loaded into a to-be-used cell (hereinafter referred to as the to-be-used cell Sn) that is the cell S to be used in current measurement, stain-related information stored in the memory 92 and related to the to-be-used cell Sn. The processor 90 also acquires a measurement item for the to-be-loaded analysis chip 12n from the reader 20. Then, on the basis of the stain-related information and current item information that is the item information of the to-be-loaded analysis chip 12n, the processor 90 executes carryover suppression processing for suppressing carryover, in which a stain due to previous measurement affects current measurement.

In the carryover suppression processing, the processor 90 executes, for example, combination determination processing of determining, on the basis of the combination information, whether a combination of previous item information acquired from stain-related information on the to-be-used cell Sn and current item information on the to-be-loaded analysis chip 12n acquired through the reader 20 corresponds to a target combination. In other words, it is determined whether the combination of the previous item information and the current item information corresponds to any of the target combinations of the measurement item 1 and the measurement item 2, stored in the memory 92. Then, when determined that the combination corresponds to any of the target combinations, the processor 90 executes preset processing.

As the preset processing, for example, the processor 90 determines the presence or absence of a stain on the to-be-used cell Sn on the basis of the stain information acquired from the stain-related information on the to-be-used cell Sn and changes the to-be-used cell Sn when determined that a stain is present.

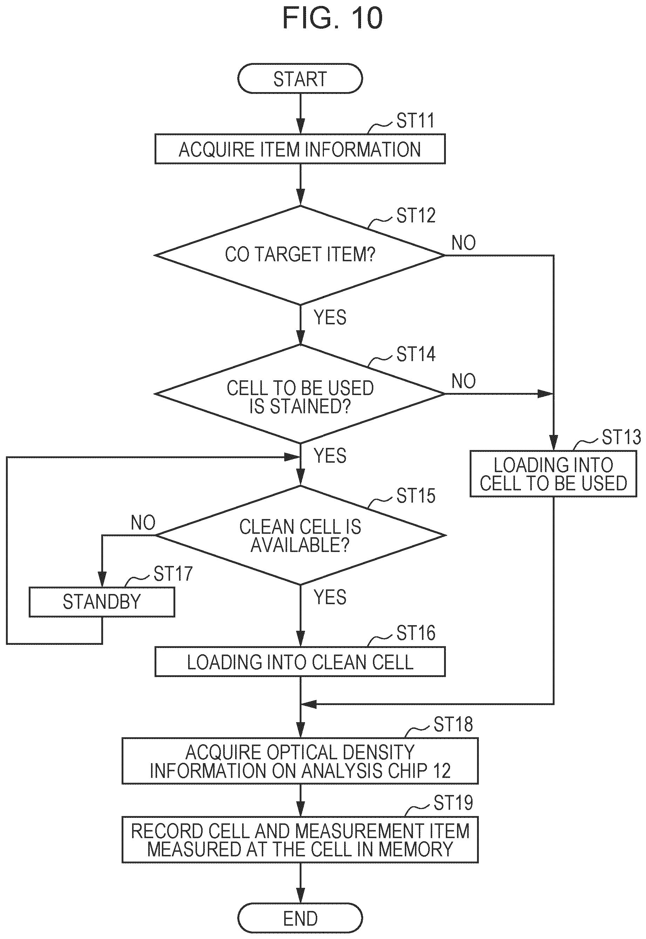

An example of the flow of a test including the carryover suppression processing using the analytical device 100 will be described with reference to Fig. 10.

As illustrated in Fig. 10, the processor 90 first acquires, from the reader 20, item information related to a measurement item for the to-be-loaded analysis chip 12n, which is the analysis chip 12 to be loaded for next measurement (step ST11). The analysis chip 12 located closest to the bottom of the stocker 14 of the chip set section 10 is the to-be-loaded analysis chip 12n. The reader 20 installed below the stocker 14 reads the to-be-loaded analysis chip 12n in a state of being accommodated in the stocker 14. The reader 20 outputs read item information to the processor 90, and the processor 90 acquires the item information.

Next, for the to-be-used cell Sn where the to-be-loaded analysis chip 12n is to be measured, the processor 90 reads out a measurement item in previous measurement performed in the to-be-used cell Sn from the memory 92. The processor 90 then determines whether a combination of the previous measurement item and the current measurement item corresponds to a target combination with a possibility of occurrence of carryover. The processor 90 determines whether the combination of the previous measurement item and the current measurement item corresponds to any of the target combinations of the measurement item 1 and the measurement item 2 shown in Fig. 9, that is, whether the current measurement item is a carryover (CO) target item (step ST12).

When determined that the combination of the previous measurement item and the current measurement item does not correspond to the target combination (step ST12: NO), the processor 90 loads the to-be-loaded analysis chip 12n into the to-be-used cell Sn (step ST13). On the other hand, if it is determined that the combination of the previous measurement item and the current measurement item corresponds to a target combination (step ST12: YES), it is determined whether the to-be-used cell Sn is stained (step ST14). Here, stain information on the pressing surface 64A of the pressing member 64 acquired after the previous measurement and before the current measurement is read out as stain-related information on the to-be-used cell Sn from memory 92.

If the to-be-used cell Sn is not stained (step ST14: NO), the processor 90 loads the analysis chip 12 into the to-be-used cell Sn (step ST13). If the to-be-used cell Sn is stained (step ST14: YES), the processor 90 determines whether a clean cell is available (step ST15).

If a clean cell is available (step ST15: YES), the to-be-loaded analysis chip 12n is loaded into the clean cell (step ST16). If there are multiple clean cells, the to-be-loaded analysis chip 12n may be loaded into any of the clean cells. If no clean cell is available (step ST15: NO), the to-be-loaded analysis chip 12n is not loaded into a cell and is put on standby (step ST17). The to-be-loaded analysis chip 12n is on standby until a clean cell becomes available and, when a clean cell becomes available, is loaded into the clean cell (step ST16).

Subsequently, the substrate 62 is rotated to move the to-be-loaded analysis chip 12n to the position of the detection unit 70, and photometry is performed with respect to the reaction region 12A of the to-be-loaded analysis chip 12n by the detection unit 70 to detect optical density. The processor 90 acquires a detection signal indicating the optical density from the detection unit 70 (step ST18). The processor 90 derives the concentration of the specimen included in the test substance sample on the basis of the detection signal and outputs a result to a display device (not illustrated) or the like.

The processor 90 records, as a piece of the stain-related information, the No. of the used cell and measured measurement item in the memory 92, that is, stores the stain-related information in the memory 92 (step ST19).

A test of the to-be-loaded analysis chip 12n is performed through the above-described steps.

When the analysis chips 12 are loaded into the incubator 60, in practice, the analysis chips 12 are loaded into one or a plurality of the cells S1 to S13 sequentially, and, after incubation is performed with respect to a plurality of the analysis chips 12, photometry is sequentially carried out for each analysis chip 12.

After measurement of the plurality of the analysis chips 12 loaded together is completed and the analysis chips in all of the cells S1 to S13 are discarded, the processor 90 executes stain detection processing for the pressing surface 64A of the pressing member 64 of each of the cells S1 to S13.

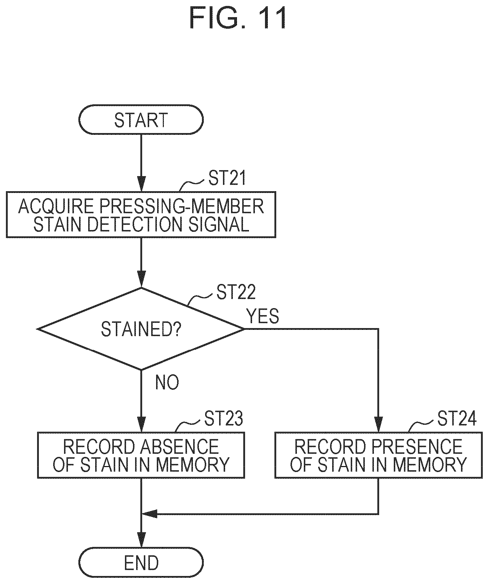

Each of the cells S1 to S13 is subjected at the detection unit 70 to the stain detection processing. Fig. 11 illustrates a flow of the stain detection processing. The processor 90 controls the detection unit 70 to perform stain detection for each pressing member 64 and acquires a detection signal from the detection unit 70 (step ST21). As already mentioned, the detection light L0 is output from the light source 72, and the pressing surface 64A is irradiated with the detection light L0. The photodetector 74 detects the reflected light L2 from the pressing surface 64A and outputs a detection signal corresponding to the reflected light L2 to the processor 90. The processor 90 determines the presence or absence of a stain on the basis of the detection signal acquired from the detection unit 70 (step ST22). Then, the processor 90 records the absence of a stain in the memory 92 if there is no stain (step ST23) and records the presence of a stain in the memory 92 if there is a stain (step ST24). The result of this determination of the presence or absence of a stain is recorded, as one piece of the stain-related information, in the memory 92. The stain detection processing is executed for each cell, and a measurement item for the previously measured analysis chip and the presence or absence of a stain are stored, as the stain-related information, for each cell in the memory 92 (see Fig. 8). The stain-related information stored in the memory 92 is used for the carryover suppression processing when analysis chips are loaded into respective cells in next measurement.

As described above, the analytical device 100 includes the stain detection mechanism and the processor 90. The processor 90 executes the carryover suppression processing for suppressing carryover, in which a stain due to previous measurement affects current measurement, on the basis of the stain-related information and the current item information, which is the item information of a to-be-loaded analysis chip. Therefore, it is possible to reduce errors in measurement values due to carryover. Since it is not necessary to separate cells for each measurement item in advance, the impact on takt time can be minimized. It is possible to reduce the number of analysis chips treated as analysis errors due to measurement performed while carryover occurs and to eliminate waste of test substances. Since the analytical device specifies and sets the order of measurement items automatically, users do not need to perform specification, setting, and the like of the order of measurement items. It is thus possible to reduce burden of users.

In the above embodiment, the memory 92 stores combination information related to target combinations, which are combinations of multiple pieces of item information with a possibility of occurrence of carryover. In the carryover suppression processing, the processor 90 executes, on the basis of the combination information that is information stored in the memory 92, combination determination processing of determining whether a combination of previous item information acquired from stain-related information on a to-be-used cell and current item information of the to-be-loaded analysis chip 12n acquired through the reader 20 corresponds to a target combination. If determined that the combination corresponds to the target combination, the processor 90 executes preset processing. The preset processing is processing for suppressing loading of analysis chips for combinations that cause carryover into cells and can suppress occurrence of measurement errors due to carryover.

In particular, as the preset processing, in the above-described embodiment, the presence or absence of a stain on the to-be-used cell Sn is determined on the basis of the stain information acquired from the stain-related information on the to-be-used cell Sn. If it is determined that a stain is present, the to-be-used cell Sn is changed. This reliably prevents the loading of analysis chips for combinations that cause carryover into cells.

In the above-described embodiment, when stain detection is performed for the pressing surface 64A of the pressing member 64, the presence or absence of a stain is recorded in the memory 92. In addition, the processor 90 may stop measurement using the to-be-used cell Sn when determined that a stain is present and may execute processing related to cleansing of the pressing member 64 for the to-be-used cell Sn. Here, the "cleansing" means removing a stain, and the method of cleansing is not limited. Cleansing includes cleaning by wiping.

For example, the analytical device 100 may include a cleansing mechanism that cleans the pressing member 64 and may cause the cleansing mechanism to clean, as processing related to cleansing, the pressing member 64 for the to-be-used cell Sn.

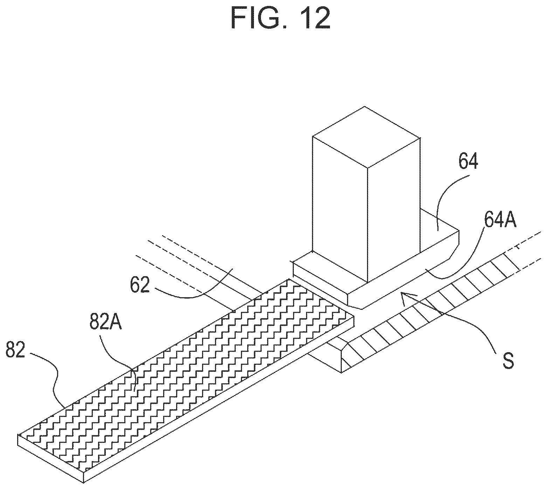

As the cleansing mechanism, for example, the chip disposal mechanism 80 can be used. As illustrated in Fig. 12, a cleansing member 82A such as a wiping cloth or a brush is provided on the upper surface of the disposal bar 82 of the chip disposal mechanism 80. Then, by performing a disposal operation with the disposal bar 82, that is, by inserting and pulling out the disposal bar 82 into and from the cell S, a stain on the pressing surface 64A is removed by the cleansing member 82A.

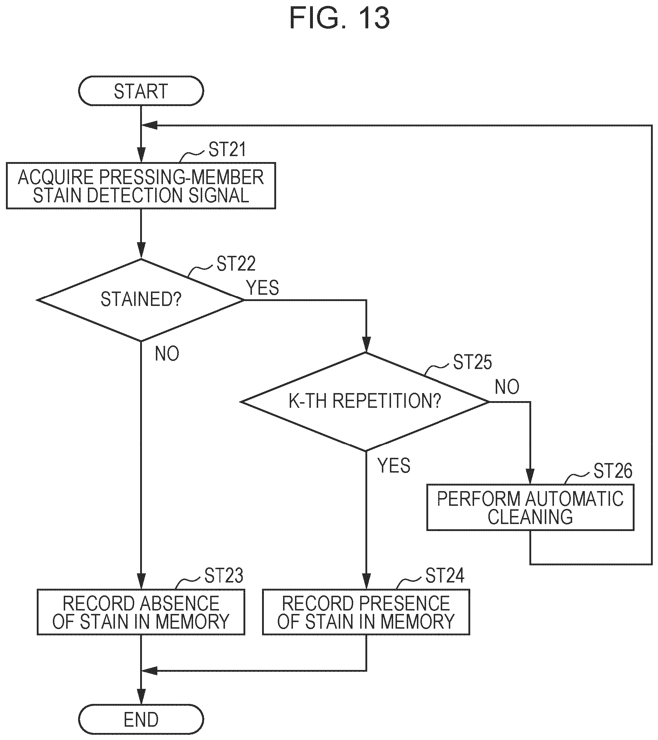

Fig. 13 illustrates a flow of stain detection when automatic cleaning is performed by the cleansing mechanism. The same steps as those shown in Fig. 11 are denoted by the same reference signs.

As illustrated in Fig. 13, the processor 90 performs stain detection for the pressing member 64 and acquires a detection signal (step ST21). The processor 90 determines the presence or absence of a stain from the detection signal (step ST22). When determined that there is no stain (step ST22: NO), the processor 90 records the absence of a stain in the memory 92 (step ST23). When determined that there is a stain (step ST22: YES), the processor 90 controls the cleansing mechanism to perform automatic cleaning of the pressing member 64 (step ST26). After automatic cleaning is performed, the steps ST21 to ST22 are repeated. If it is determined that a stain is still present even after K-th repetition of automatic cleaning (step ST25: YES), the presence of the stain is recorded in the memory 92 (step ST24). The number of repetitions may be set to, for example, two or three, as appropriate.

As described above, by configuring such that presence or absence of a stain on each pressing member 64 is detected and automatic cleaning is performed when a stain is present, it is possible to reduce the number of stained cells and possible to improve measurement efficiency.

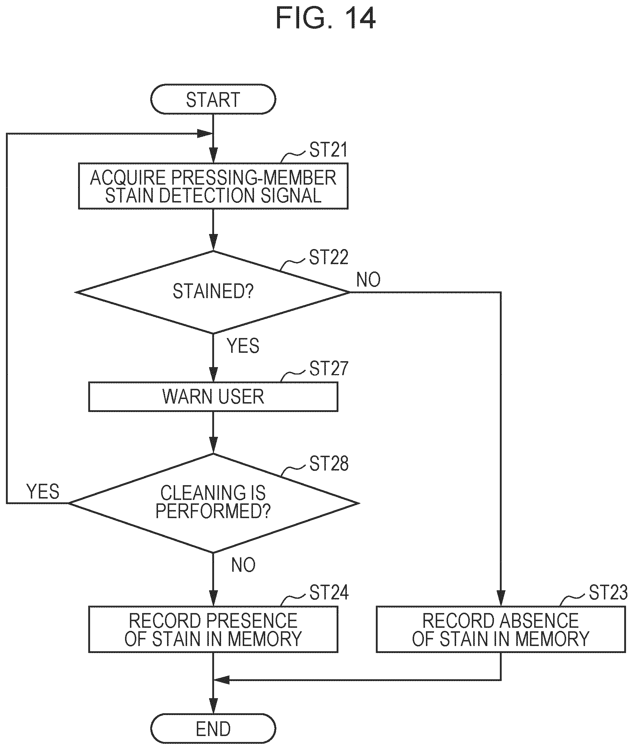

In addition to performing automatic cleaning, the processor 90 may perform, as cleansing-related processing, processing of issuing a warning to prompt a user to perform cleansing. Fig. 14 illustrates a flow of stain detection when a warning is to be issued to a user. The same steps as those shown in Fig. 11 and Fig. 13 are denoted by the same reference signs.

As illustrated in Fig. 14, the processor 90 performs stain detection of the pressing member 64 and acquires a detection signal (step ST21). The processor 90 determines the presence or absence of a stain from the detection signal (step ST22). When determined that there is no stain (step ST22: NO), the processor 90 records the absence of a stain in the memory 92 (step ST23). When determined that there is a stain (step ST22: YES), the processor 90 issues a warning to the user (step ST27). For example, a warning prompting the user to perform cleaning is issued by causing a monitor (not illustrated) to display a cell No. and the presence of a stain. If the user performs cleaning (step ST28: YES), the processing returns to the step ST21. On the other hand, if the user does not perform cleaning (step ST28: NO), the presence of the stain is recorded in the memory 92 (step ST24).

As described above, as processing related to cleansing of the to-be-used cell, the processor 90 can prompt the user to perform cleaning by issuing a warning prompting the user to perform cleaning. It is possible at least to make the user aware that there is a stain on a cell.

Such processing related to cleansing of the pressing member is preferably executed, regardless of whether subsequent measurement is to be started, for cells determined to be stained on the basis of the stain information after stain-related information is acquired by the stain detection mechanism.

In the analytical device 100 in the above embodiment, the detection unit 70 used for measuring the state of a reaction between a test substance sample and a reagent also serves as a detection unit of the stain detection mechanism that detects a stain on each pressing member 64. A detection unit dedicated to the stain detection mechanism may be included separately from the detection unit 70. However, with the detection unit 70 also serving as the detection unit of the stain detection mechanism, the number of components can be reduced, and the stain detection mechanism can be added to the analytical device 100 at a low cost.

Furthermore, in the above-described embodiment, a processor (processer) of various types mentioned below can be used as the hardware structure of the processor. In addition to a CPU, which is a general-purpose processor functioning as various processing units by executing software (program), the various types of processors includes a programmable logic device (PLD) such as a field-programmable gate array (FPGA) whose circuit configuration can be changed after manufacture and a dedicated electric circuit such as an application specific integrated circuit (ASIC), which is a processor having a circuit configuration specifically designed to execute particular processing.

Moreover, the aforementioned processing may be executed by one of these processors of various types or by a combination of two or more processors of the same or different types (for example, multiple FPGAs or a combination of a CPU and a FPGA, etc.). In addition, multiple processing units may be constituted by a single processor. As an example in which multiple processing units are constituted by a single processor, there is a form that uses a processor that, similarly to a system on chip (SOC), realizes functions of an entire system including multiple processing units by a single integrated circuit (IC) chip.

More specifically, as the hardware structure of these processors, an electric circuit (circuitry) in which circuit elements such as semiconductor elements are combined can be used.

In addition, the technology in the present disclosure is extended not only to an operation program of the analytical device but also to a computer-readable storage medium (USB memory, DVD (digital versatile disc)-ROM (read only memory), etc.) that non-transitorily stores the operation program of the analytical device.

With respect to the above embodiments, the following appendixes are further disclosed.

### Appendix 1

An analytical device on which a plurality of analysis chips are to be detachably loaded, the plurality of analysis chips each having a reaction region in which a reagent for a corresponding measurement item is immobilized and each being provided, outside the reaction region, with item information related to the corresponding measurement item, the analytical device being configured to analyze a plurality of measurement items for a test substance sample by spotting the test substance sample onto the reaction region of each of the plurality of analysis chips and measuring a state of a reaction between the test substance sample and the reagent, the analytical device including:
a loading portion that has a substrate provided with a plurality of cells in each of which a corresponding one of the analysis chips is to be loaded and a pressing member that is provided for each of the cells and that presses the analysis chip loaded in the cell in a direction toward the reaction region;
an item-information reading unit that reads the item information of each of the analysis chips;
a stain detection mechanism that detects a stain adhering to the pressing member due to a loaded analysis chip that is the analysis chip loaded in one of the cells in previous measurement, the stain detection mechanism being configured to store, in a memory, stain-related information on each of the cells, the stain-related information including stain information related to presence or absence of the stain on each of the cells and previous item information that is the item information of the loaded analysis chip, the stain information and the previous item information being associated with each other; and
a processor that executes, before loading of a to-be-loaded analysis chip that is the analysis chip to be loaded in a to-be-used cell that is the cell to be used in current measurement, carryover suppression processing for suppressing carryover, in which the stain due to the previous measurement affects the current measurement, based on the stain-related information that is stored in the memory and that is related to the to-be-used cell and current item information that is acquired from the item-information reading unit and that is the item information of the to-be-loaded analysis chip.

### Appendix 2

The analytical device according to Appendix 1,
wherein the memory stores combination information related to a target combination that is a combination of a plurality of pieces of the item information with a possibility of occurrence of the carryover, and
wherein, in the carryover suppression processing,
the processor
   executes, based on the combination information, combination determination processing of determining whether a combination of the previous item information acquired from the stain-related information on the to-be-used cell and the current item information of the to-be-loaded analysis chip acquired through the item-information reading unit corresponds to the target combination, and
   executes preset processing when determined that the combination corresponds to the target combination in the combination determination processing.

### Appendix 3

The analytical device according to Appendix 2,
wherein the processor
as the preset processing, determines presence or absence of the stain on the to-be-used cell based on the stain information acquired from the stain-related information on the to-be-used cell, and
changes the to-be-used cell when determined that the stain is present.

### Appendix 4

The analytical device according to Appendix 2,
wherein the processor
as the preset processing, determines presence or absence of the stain on the to-be-used cell based on the stain information acquired from the stain-related information on the to-be-used cell, and
stops measurement using the to-be-used cell when determined that the stain is present and executes processing related to cleansing of the pressing member for the to-be-used cell.

### Appendix 5

The analytical device according to Appendix 4, further including:
a cleansing mechanism that cleans the pressing member,
wherein the processor
   causes the cleansing mechanism to cleanse, as the processing related to the cleansing, the pressing member for the to-be-used cell.

### Appendix 6

The analytical device according to Appendix 4,
wherein the processor
issues a warning, as the processing related to the cleansing, to prompt a user to cleanse the to-be-used cell.

### Appendix 7

The analytical device according to any one of Appendix 1 to Appendix 6,
wherein the processor
executes, after the stain-related information is acquired by the stain detection mechanism, processing related to cleansing of the pressing member for the cell determined to have the stain based on the stain information, regardless of whether subsequent measurement is to be started.

### Appendix 8

The analytical device according to any one of Appendix 2 to Appendix 6 and Appendix 7 citing Appendix 2,
wherein the target combination includes two combinations that are
   a combination of a measurement item to be measured first and producing a reaction substance affecting pH and a measurement item to be measured later and for which a pH indicator is used as the reagent, and
a combination of a measurement item to be measured first and producing ammonia as a result of a reaction between a specimen in the test substance sample and the reagent and a measurement item to be measured later and for which ammonia is measured.

### Appendix 9

The analytical device according to any one of Appendix 1 to Appendix 8,
wherein, in the stain detection mechanism, a detection unit used in measurement of a state of a reaction between the test substance sample and the reagent also serves as a detection unit that detects the stain on the pressing member.

The disclosure of JP2022-148391 filed on September 16, 2022 is incorporated herein by reference in its entirety. All publications, patent applications, and technical standards mentioned in this specification are incorporated herein by reference to the same extent as if each individual publication, patent application, or technical standard was specifically and individually indicated to be incorporated by reference.

## Claims

1. An analytical device on which a plurality of analysis chips are to be detachably loaded, the plurality of analysis chips each having a reaction region in which a reagent for a corresponding measurement item is immobilized and each being provided, outside the reaction region, with item information related to the corresponding measurement item, the analytical device being configured to analyze a plurality of measurement items for a test substance sample by spotting the test substance sample onto the reaction region of each of the plurality of analysis chips and measuring a state of a reaction between the test substance sample and the reagent, the analytical device comprising:
a loading portion that has a substrate provided with a plurality of cells in each of which a corresponding one of the analysis chips is to be loaded and a pressing member that is provided for each of the cells and that presses the analysis chip loaded in the cell in a direction toward the reaction region;
an item-information reading unit that reads the item information of each of the analysis chips;
a stain detection mechanism that detects a stain adhering to the pressing member due to a loaded analysis chip that is the analysis chip loaded in one of the cells in previous measurement, the stain detection mechanism being configured to store, in a memory, stain-related information on each of the cells, the stain-related information including stain information related to presence or absence of the stain on each of the cells and previous item information that is the item information of the loaded analysis chip, the stain information and the previous item information being associated with each other; and
a processor that executes, before loading of a to-be-loaded analysis chip that is the analysis chip to be loaded in a to-be-used cell that is the cell to be used in current measurement, carryover suppression processing for suppressing carryover, in which the stain due to the previous measurement affects the current measurement, based on the stain-related information that is stored in the memory and that is related to the to-be-used cell and current item information that is acquired from the item-information reading unit and that is the item information of the to-be-loaded analysis chip.

2. The analytical device according to claim 1,
wherein the memory stores combination information related to a target combination that is a combination of a plurality of pieces of the item information with a possibility of occurrence of the carryover, and
wherein, in the carryover suppression processing,
the processor
executes, based on the combination information, combination determination processing of determining whether a combination of the previous item information acquired from the stain-related information on the to-be-used cell and the current item information of the to-be-loaded analysis chip acquired through the item-information reading unit corresponds to the target combination, and
executes preset processing when determined that the combination corresponds to the target combination in the combination determination processing.

3. The analytical device according to claim 2,
wherein the processor
as the preset processing, determines presence or absence of the stain on the to-be-used cell based on the stain information acquired from the stain-related information on the to-be-used cell, and
changes the to-be-used cell when determined that the stain is present.

4. The analytical device according to claim 2,
wherein the processor
as the preset processing, determines presence or absence of the stain on the to-be-used cell based on the stain information acquired from the stain-related information on the to-be-used cell, and
stops measurement using the to-be-used cell when determined that the stain is present and executes processing related to cleansing of the pressing member for the to-be-used cell.

5. The analytical device according to claim 4, further comprising:
a cleansing mechanism that cleans the pressing member,
wherein the processor
causes the cleansing mechanism to cleanse, as the processing related to the cleansing, the pressing member for the to-be-used cell.

6. The analytical device according to claim 4,
wherein the processor
issues a warning, as the processing related to the cleansing, to prompt a user to cleanse the to-be-used cell.

7. The analytical device according to claim 1,
wherein the processor
executes, after the stain-related information is acquired by the stain detection mechanism, processing related to cleansing of the pressing member for the cell determined to have the stain based on the stain information, regardless of whether subsequent measurement is to be started.

8. The analytical device according to claim 2,
wherein the target combination includes two combinations that are
a combination of a measurement item to be first and producing a reaction substance affecting pH and a measurement item to be measured later and for which a pH indicator is used as the reagent, and
a combination of a measurement item to be measured first and producing ammonia as a result of a reaction between a specimen in the test substance sample and the reagent and a measurement item to be measured later and for which ammonia is measured.

9. The analytical device according to claim 1,
wherein, in the stain detection mechanism, a detection unit used in measurement of a state of a reaction between the test substance sample and the reagent also serves as a detection unit that detects the stain on the pressing member.
